# EUROPEAN PATENT APPLICATION

(11) **EP 3 793 312 A2**
(43) Date of publication of application: **17.03.2021**
(21) Application number: 20191658.2
(22) Date of filing: 19.08.2020
(51) Int. Cl.: H04W 74/08, H04W 84/12

(54) **METHOD AND SYSTEM FOR MULTI-LINK AGGREGATION IN WIRELESS LOCAL AREA NETWORK**

(30) Priority: 10.09.2019 US 201962898470 P; 13.09.2019 US 201962900162 P; 30.10.2019 US 201962928271 P; 08.11.2019 US 201962933039 P; 13.12.2019 US 201962947955 P; 10.01.2020 US 202062959414 P; 13.03.2020 US 202062989386 P; 20.03.2020 US 202062992719 P; 06.05.2020 US 202063021069 P; 29.07.2020 US 202016942215
(71) Applicant: Samsung Electronics Co., Ltd., Gyeonggi-do 16677 (KR)
(72) Inventor: RANGANATH, Ashok, Los Gatos, CA 95032 (US); NARIBOLE, Sharan, San Jose, CA 95134 (US); KANDALA, Srinivas, Morgan Hill, CA 95037 (US); LEE, Wook Bong, San Jose, CA 95136 (US)
(74) Representative: Kuhnen & Wacker Patent- und Rechtsanwaltsbüro PartG mbB

(57) **Abstract**

Methods and devices are provided for multi-link transmission opportunity aggregation. A first enhanced ready to send (RTS) transmission is received on a first link. A second enhanced RTS transmission is received on a second link. The second enhanced RTS transmission is received concurrently with the first enhanced RTS transmission. At least one non-overlapping clear to send (CTS) transmission is transmitted over the first link and/or the second link. A first transmission is received over the first link. The first transmission includes a first packet extension (PE). A second transmission is received over the second link. The second transmission is received concurrently with the first transmission and includes a second PE. Feedback with respect to both the first transmission and the second transmission is transmitted over one of the first link and the second link after reception of a respective one of the first PE and the second PE.

## Description

### PRIORITY

This application is based on and claims priority under 35 U.S.C. §119(e) to a U.S. Provisional Patent Application Nos. 62/898,470, 62/900,162, 62/928,271, 62/933,039, 62/947,955, 62/959,414, 62/989,386, 62/992,719, and 63/012,069 filed on September 10, 2019, September 13, 2019, October 30, 2019, November 8, 2019, December 13, 2019, January 10, 2020, March 13, 2020, March 20, 2020, and May 6, 2020, respectively, in the United States Patent and Trademark Office, the contents of which are incorporated herein by reference.

### FIELD

The present disclosure relates generally to a wireless local area network (WLAN), and more particularly, to a method and a system for multi-link aggregation in a WLAN.

### BACKGROUND

A demand currently exists for improved throughput performance in existing WLAN applications and for lower latency and high-reliability applications over WLANs. Concurrently, devices (e.g., mobile stations (STAs) and access points (APs)) have been developed with multiple radios capable of operating simultaneously on multiple channels/links that may be distributed over multiple bands, such as, for example, 2.4 GHz, 5 GHz and 6 GHz. Multi-channel or multi-link operation in the same network (e.g., basic service set (BSS)) has the potential to improve the throughput, since frames from a traffic session may be transmitted on multiple links providing increased bandwidth. This multi-link operation also has the potential to reduce latency, since devices contend on multiple links and utilize the first available link. The multi-link operation additionally has the potential to increase reliability, since frames may be duplicated over multiple links. This multi-link operation further has the potential to enable flexible channel/link switching without negotiation overhead. Multi-link/multiband operation represents a paradigm shift, moving from the BSS operating on a single link, to the BSS operating over multiple links, in which STAs may dynamically choose to operate on a subset of links ranging from a single link to multiple links.

In some forms of multi-link operation, with respect to a pair of links, it may be beneficial for the participating devices to have the capability to perform reception on one link while simultaneously transmitting on the other link (simultaneous transmit-receive (STR) capability). The STR capability on a pair of links may be determined by several factors of radio design and BSS operation including, for example, links of operation, bandwidth of each link, transmit power limit, antenna distribution between the links, etc. Therefore, a multi-radio device may lack STR capability for particular link combinations. If the AP itself lacks STR capability, the multi-link operation may be restricted, leading to negligible gain over legacy single-link operation. Typically, AP devices are many-antenna systems and the AP establishes the links of operation in the BSS. Therefore, the AP may select the links of operation such that the AP has STR capability on every pair of links in its BSS. In contrast, a STA might lack STR capability for a particular set of operating links due to a smaller form factor compared to AP. STAs that lack STR capability are referred to as non-STR STAs. For example, one such multi-link operating constraint includes a simultaneous transmit-transmit (STT) constraint, in which a STA may not be capable of simultaneous transmission due to issues with intermodulation, or due to RF limitations of a single antenna.

Transmission opportunity (TXOP) aggregation of transmissions over multiple links has been proposed to boost medium access utilization, for STAs with operating constraints.

### SUMMARY

According to one embodiment, a method is provided for multi-link transmission opportunity aggregation at a STA. A first transmission is received from an AP over a first link between the STA and the AP. The first transmission includes a first packet extension (PE). A second transmission is received from the AP over a second link between the STA and the AP. The second transmission is received concurrently with the first transmission and includes a second PE. Feedback with respect to both the first transmission and the second transmission is transmitted to the AP over one of the first link and the second link after reception of a respective one of the first PE and the second PE is completed.

According to one embodiment, a method is provided for multi-link transmission opportunity aggregation at a STA. A first enhanced ready to send (RTS) transmission is received from an AP on a first link between the STA and the AP. A second enhanced RTS transmission is received from the AP on a second link between the STA and the AP. The second enhanced RTS transmission is received concurrently with the first enhanced RTS transmission. At least one non-overlapping clear to send (CTS) transmission is transmitted over at least one of the first link and the second link, in response to the first enhanced RTS transmission and the second enhanced RTS transmission.

According to one embodiment, a method is provided for multi-link transmission opportunity aggregation at an AP. A first transmission is transmitted to a STA over a first link between the STA and the AP. The first transmission includes a first PE. A second transmission is transmitted to the STA over a second link between the STA and the AP. The second transmission is transmitted concurrently with the first transmission and includes a second PE. Feedback with respect to the first transmission and the second transmission is received from the STA over one of the first link and the second link after transmission of a respective one of the first PE and the second PE is completed.

According to one embodiment, a method is provided for multi-link transmission opportunity aggregation at an AP. A first enhanced RTS transmission is transmitted to a STA on a first link between the STA and the AP. A second enhanced RTS transmission is transmitted to the STA on a second link between the STA and the AP. The second enhanced RTS transmission is received concurrently with the first enhanced RTS transmission. At least one non-overlapping CTS transmission is received from the STA over at least one of the first link and the second link, in response to the first enhanced RTS transmission and the second enhanced RTS transmission.

According to one embodiment, a STA is provided that includes a processor, and a non-transitory computer readable storage medium storing instructions. When executed, the instructions cause the processor to: receive, from an AP, a first transmission over a first link between the STA and the AP, where the first transmission includes a first PE; receive, from the AP, a second transmission over a second link between the STA and the AP, where the second transmission is received concurrently with the first transmission and includes a second PE; and transmit, to the AP, feedback with respect to both the first transmission and the second transmission over one of the first link and the second link after reception of a respective one of the first PE and the second PE is completed.

According to one embodiment, a STA is provided that includes a processor, and a non-transitory computer readable storage medium storing instructions. When executed, the instructions cause the processor to: receive, from an AP, a first enhanced RTS transmission on a first link between the STA and the AP; receive, from the AP, a second enhanced RTS transmission on a second link between the STA and the AP, where the second enhanced RTS transmission is received concurrently with the first enhanced RTS transmission; and transmit, to the AP, at least one non-overlapping CTS transmission over at least one of the first link and the second link, in response to the first enhanced RTS transmission and the second enhanced RTS transmission.

According to one embodiment, an AP is provided that includes a processor, and a non-transitory computer readable storage medium storing instructions. When executed, the instructions cause the processor to: transmit, to a STA, a first transmission over a first link between the STA and the AP, where the first transmission includes a first PE; transmit, to the STA, a second transmission over a second link between the STA and the AP, where the second transmission is transmitted concurrently with the first transmission and includes a second PE; and receive, from the STA, feedback with respect to the first transmission and the second transmission over one of the first link and the second link after transmission of a respective one of the first PE and the second PE is completed.

According to one embodiment, an AP is provided that includes a processor, and a non-transitory computer readable storage medium storing instructions. When executed, the instructions cause the processor to: transmit, to a STA, a first enhanced RTS transmission on a first link between the STA and the AP; transmit, to the STA, a second enhanced RTS transmission on a second link between the STA and the AP, where the second enhanced RTS transmission is received concurrently with the first enhanced RTS transmission; and receive, from the STA, at least one non-overlapping CTS transmission over at least one of the first link and the second link, in response to the first enhanced RTS transmission and the second enhanced RTS transmission.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating multilink medium access;
FIG. 2 is a diagram illustrating multi-link TXOP aggregation over links A and B;
FIG. 3 is a diagram illustrating multi-link TXOP aggregation over links A and B with failed acknowledgement (ACK) transmission;
FIG. 4 is a diagram illustrating multi-link TXOP aggregation over links A and B with ACK transmission, according to an embodiment;
FIG. 5 is a diagram illustrating multi-link TXOP aggregation over links A and B with failed CTS transmission;
FIG. 6 is a diagram illustrating multi-link TXOP aggregation over links A and B with CTS transmission over a single link, according to an embodiment;
FIG. 7 is a diagram illustrating multi-link TXOP aggregation over links A and B with sequential CTS transmission over each link, according to another embodiment;
FIG. 8 is a flowchart illustrating a method for multi-link TXOP aggregation at a STA, according to an embodiment;
FIG. 9 is a flowchart illustrating a method for multi-link TXOP aggregation at an AP, according to an embodiment; and
FIG. 10 is a block diagram of an electronic device in a network environment, according to an embodiment.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate the existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

The electronic device according to one embodiment may be one of various types of electronic devices. The electronic devices may include, for example, a portable communication device (e.g., a smart phone), a computer, a portable multimedia device, a portable medical device, a camera, a wearable device, or a home appliance. According to one embodiment of the disclosure, an electronic device is not limited to those described above.

The terms used in the present disclosure are not intended to limit the present disclosure but are intended to include various changes, equivalents, or replacements for a corresponding embodiment. With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2nd," "first," and "second" may be used to distinguish a corresponding component from another component, but are not intended to limit the components in other aspects (e.g., importance or order). It is intended that if an element (e.g., a first element) is referred to, with or without the term "operatively" or "communicatively", as "coupled with," "coupled to," "connected with," or "connected to" another element (e.g., a second element), it indicates that the element may be coupled with the other element directly (e.g., wired), wirelessly, or via a third element.

As used herein, the term "module" may include a unit implemented in hardware, software, or firmware, and may interchangeably be used with other terms, such as, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC).

An AP may establish a BSS operation over multiple links. These links may be disposed on different bands, although a subset of the links may be disposed on the same band. Examples of a multi-link BSS may be a 20 MHz operation in a 2.4 GHz band, an 80 MHz operation in a 5 GHz band, and a 160 MHz operation in a 6 GHz band. Due to a diversity in link conditions across the links, a data rate used by a device may be different on different links. The AP advertises the multi-link operation in broadcast frames including, for example, beacons, probe responses, etc. STAs joining the BSS may indicate the links they want to operate on during association and/or dynamically in the form of an operating mode change indication after association. For example, a STA may temporarily switch to single link operation for power saving when it has no backlogged traffic or for co-existence with other technologies (e.g., Bluetooth). Herein, multi-link operation is described over two links, but is not limited thereto.

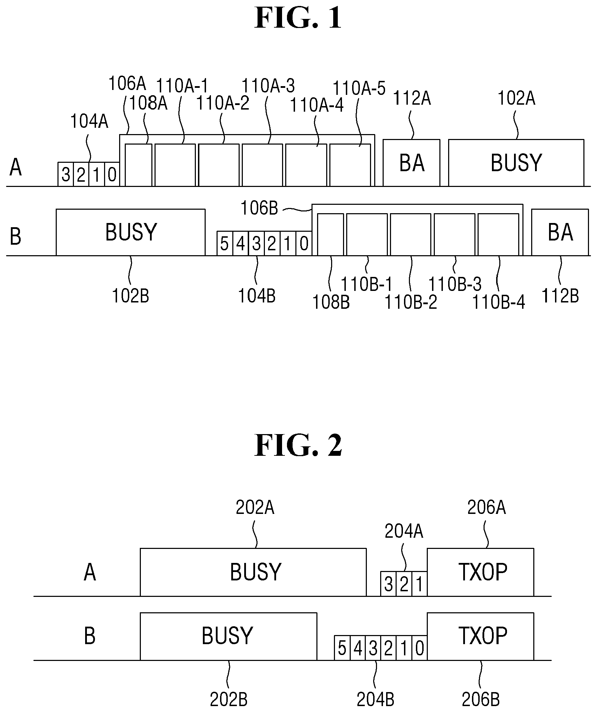

Medium access in each link does not require synchronization between links. FIG. 1 is a diagram illustrating multilink medium access by a device operating on links A and B. A link may be considered to be in a busy link state upon detecting an energy above an energy detection threshold. A first busy link state 102A is shown on link A, and a second busy link state 102B is shown on link B. A data transmission on a link begins when a value of a backoff counter reaches zero. A first backoff counter 104A is shown on link A, and a second backoff counter 104B is shown on link B.

A single physical protocol layer data unit (PPDU) transmission consists of a physical (PHY) layer preamble and multiple media access control (MAC) layer data units (MPDUs). A first PPDU 106A is shown on link A and includes a first PHY preamble 108A and a first set of MPDUs 110A-1 to 110A-5. A second PPDU 106B is shown on link B and includes a second PHY preamble 108B and a second set of MPDUs 110B-1 to 110B-4. A corresponding immediate Block ACK includes a bitmap in which each bit acknowledges the successful reception of a corresponding MPDU. A first Block ACK 112A is shown on link A in response to the reception of the first PPDU 106A, and a second Block ACK 112B is shown on link B in response to the reception of the second PPDU 106B. FIG. 1 illustrates the asynchronous nature of the medium access, in which the first Block ACK 112A on link A occurs simultaneously with the second PPDU 106B on link B. Embodiments of the present disclosure are applicable to both ACKs and Block ACKs, and thus, both terms are used interchangeably herein.

To realize the full potential of multi-link operation, participating devices would ideally be capable of simultaneous bi-directional communication on the multiple links. With such capability, uplink and downlink communication can occur simultaneously between the AP and the STA in an asynchronous manner. However, a multi-radio device may lack such a capability due to in-device power leakage caused by insufficient frequency separation of the operating links. Multi-link operating constraints include a simultaneous transmit-receive (STR) constraint, a simultaneous transmit-transmit (STT) constraint, and a simultaneous receive-receive (SRR) constraint.

For an STR constraint, a STA cannot detect a PHY preamble or decode a PHY header on link A when transmitting on link B.

For an STT constraint, a STA may not be capable of simultaneous transmission due to issues with intermodulation, or due to RF limitations of a single antenna.

For an SRR constraint, a STA may not be capable of simultaneous reception due to RF limitations of a single antenna. Therefore, a STA with an SRR constraint generally returns to single link operation.

Accordingly, STAs in multi-link BSS are classified as an STR STA, a non-STR STA, a non-STT STA, and a single link (SL) STA. The STR STA is capable of STR, STT, and SRR. The Non-STR STA is not capable of STR, but is capable of STT and SRR. The non-STT STA is not capable of STR or STT, but is capable of SRR. The SL STA operates only on one of the links. The SL STA may be a legacy STA or a STA operating on a single link due to power saving or SRR constraints.

In order to boost medium access utilization of multi-link STAs with operation constraints or high throughput application demand, TXOP aggregation of transmissions over multiple links is utilized.

FIG. 2 is a diagram illustrating multi-link TXOP aggregation. When a second busy link state 202B ends on link B, a second backoff counter 204B begins on link B. Similarly, when a first busy link state 202A ends on link A, a first backoff counter 204A begins on link A. When the second backoff counter 204B on link B reaches zero, the link state of link A is evaluated. Specifically, when the second backoff counter 204B reaches zero, the first backoff counter 204A is currently running and is at "7". Although having a non-zero backoff counter on link A, if link A is also idle or has been idle for a pre-defined time (e.g., 25 microseconds), a TXOP is granted to link A along with link B, leading to concurrent transmissions on both links. Accordingly, a first TXOP 206A on link A is synchronized with a second TXOP 206B on link B to prevent STR collision at a non-STR STA.

The ability to utilize the above-described aggregation is dependent on network conditions, and lightly loaded network is more likely to utilize the aggregation compared to a congested network. The AP can dynamically enable the multi-link TXOP aggregation based on network and traffic conditions.

A non-STT STA can simultaneously receive downlink TXOP aggregation. However, when downlink TXOP aggregation is performed, simultaneous ACKs or Block ACKs cannot be transmitted due to the STT constraint of the non-STT STA.

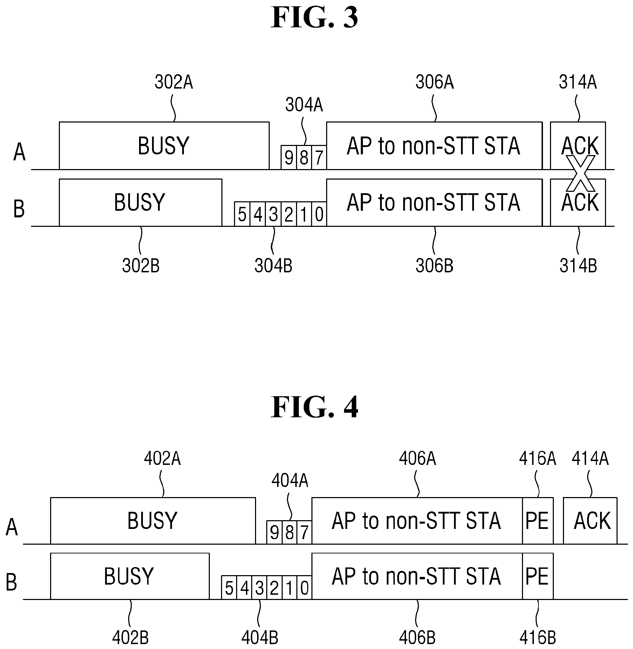

FIG. 3 is a diagram illustrating multi-link TXOP aggregation over links A and B with failed ACK transmission. Reference numerals 302A, 302B, 304A, 304B, 306A, and 306B of FIG. 3 respectively correspond to reference numerals 202A, 202B, 204A, 204B, 206A, and 206B of FIG. 2, which are described in detail above. A first TXOP 306A is provided from the AP to the non-STT STA on link A, and a second TXOP 306B is simultaneously provided from the AP to the non-STT STA on link B. FIG. 3 illustrates that simultaneous transmission of a first ACK 314A on link A and a second ACK 314B on link B, from the non-STT STA to the AP, are not possible due to the STT constraint on the non-STT STA.

For high efficiency, an immediate ACK response is preferable. According to an embodiment, due to the STT constraint, feedback is transmitted over a single link. The AP may explicitly recommend the link to be used for the immediate ACK response, due to existing diverse link conditions. Alternatively, the non-STT STA may be locked onto a particular link for the immediate ACK response transmission. Further, the non-STT STA can decide which link is to be used for the response transmission.

Additional time may be needed to account for processing overhead at the non-STT STA in order to construct the immediate ACK response for frames received over multiple links. Accordingly, the AP and the non-STT STA may negotiate a PE for a downlink multi-link TXOP aggregation mode during multi-link setup. The AP uses the negotiated PE for this mode.

FIG. 4 is a diagram illustrating multi-link TXOP aggregation over links A and B with ACK transmission, according to an embodiment. Reference numerals 402A, 402B, 404A, 404B, 406A, and 406B of FIG. 4 respectively correspond to reference numerals 202A, 202B, 204A, 204B, 206A, and 206B of FIG. 2, which are described in detail above. A first PE 416A is added to a first TXOP 406A on link A, and a second PE 416B is added to a second TXOP 406B on link B to provide additional time that is needed to construct a unified Block ACK response for both the first TXOP 406A received on link A and the second TXOP 406B received on link B. The single ACK response, ACK 414A, is transmitted on link A, from the non-STT STA to the AP.

With respect to TXOP aggregation, upon a backoff counter reaching zero, and prior to transmission of the aggregated TXOP, an enhanced RTS transmission is sent from the AP to the non-STT STA on both links. However, due to the STT constraint of the non-STT STA, a CTS transmission cannot be transmitted simultaneously from the non-STT STA to the AP.

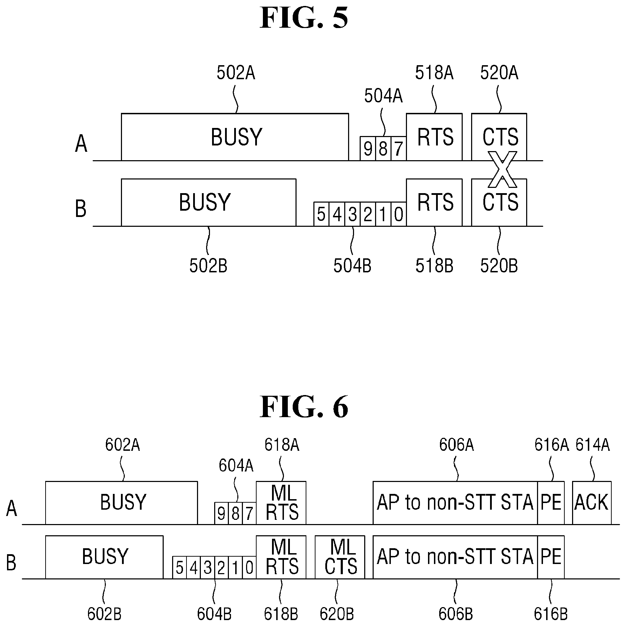

FIG. 5 is a diagram illustrating multi-link TXOP aggregation over links A and B with failed CTS transmission. Reference numerals 502A, 502B, 504A, and 504B of FIG. 5 respectively correspond to reference numerals 202A, 202B, 204A, and 204B of FIG. 2, which are described in detail above. As previously described with respect to FIG. 2, when a second backoff counter 504B on link B reaches zero, the link sate of link A is evaluated. A first backoff counter 504A of link A is currently running, and thus, link A is also idle. A first enhanced RTS 518A and a second enhanced RTS 518B are simultaneously transmitted, from the AP to the non-STT STA, on links A and B, respectively. However, the non-STT STA is not able to simultaneously transmit a first CTS 520A and a second CTS 520B on links A and B due to the STT constraint of the non-STT STA.

FIG. 6 is a diagram illustrating multi-link TXOP aggregation over links A and B with a single multi-link CTS transmission, according to an embodiment. Reference numerals 602A, 602B, 604A, 604B, 606A, 606B, 614A, 616A, and 616B of FIG. 6 respectively correspond to reference numerals 402A, 402B, 404A, 404B, 406A, 406B, 414A, 416A, and 416B of FIG. 4, which are described in above. The AP transmits a first enhanced RTS 618A and a second enhanced RTS 618B on links A and B, respectively. In response, a single multi-link CTS 620B is transmitted on link B and provides information for both links A and B. The multi-link CTS 620B includes a link status of all links. A PE may also be required in the first enhanced RTS 618A and the second enhanced RTS 618B to allow for multi-link CTS construction overhead.

The non-STT STA may use any link that is not busy for the multi-link CTS transmission. If the AP does not receive the multi-link CTS, the AP does not perform transmission on either link. If the multi-link CTS indicates a busy status on the link on which the backoff counter was zero (e.g., link B in FIG. 6), the AP will abandon the transmission. If the multi-link CTS indicates a busy status on an aggregated link (e.g., link A in FIG. 6), the AP can transmit only on the link on which the backoff counter was 0 (e.g., link B in FIG. 6). The backoff procedure can be resumed at the AP on both links after a multi-link CTS timeout in case the AP does not receive the multi-link CTS.

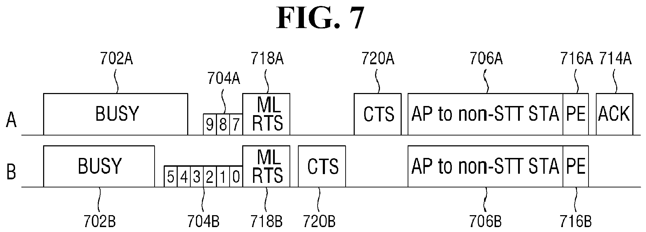

FIG. 7 is a diagram illustrating multi-link TXOP aggregation over links A and B with sequential CTS transmission over each link, according to another embodiment. Reference numerals 702A, 702B, 704A, 704B, 706A, 706B, 714A, 716A, and 716B of FIG. 7 respectively correspond to reference numerals 402A, 402B, 404A, 404B, 406A, 406B, 414A, 416A, and 416B of FIG. 4, which are described in detail above. The AP transmits a first enhanced RTS 718A and a second enhanced RTS 718B on links A and B, respectively. In response, the non-STT STA performs sequential CTS transmission on each link. Specifically, the non-STT STA transmits a second CTS 720B to the AP on link B, and subsequently transmits a first CTS 720A to the AP on link B. The first enhanced RTS 718A and the second enhanced RTS 718B include the link sequence of the CTS transmissions. The first link in the sequence is the link on which the backoff counter reached zero (e.g., link B in FIG. 7).

A duration setting is provided in the RTS MAC header. A standard duration, which is set to a TXOP duration, is provided in the enhanced RTS sent on the link on which the backoff counter reached zero (e.g., link B in FIG. 7). The duration is set to the end of the corresponding CTS transmission in the enhanced RTS sent on the aggregated link (e.g., link A in FIG. 7).

If the CTS is not transmitted on the first link in the sequence, the non-STT STA does not transmit the CTS on the second link. If the AP does not receive a CTS on the first link in the sequence, the AP does not perform transmission on either link. Even if the non-STT STA transmits CTS on both links, the AP may only receive the CTS on a single link. The backoff procedure can be resumed on both links after a multi-link CTS timeout in case the AP does not receive the multi-link CTS on both of the links.

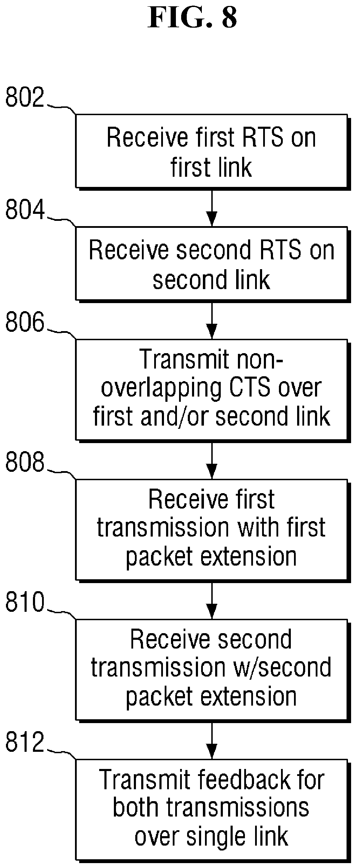

FIG. 8 is a flowchart illustrating a method for multi-link TXOP aggregation at a STA, according to an embodiment. At 802, a first enhanced RTS transmission is received from an AP on a first link between the STA and the AP. At 804, a second enhanced RTS transmission is received on a second link between the STA and the AP. The second enhanced RTS transmission is received concurrently with the first enhanced RTS transmission. At 806, at least one non-overlapping CTS transmission is transmitted to the AP over at least one of the first link and the second link, in response to the first enhanced RTS transmission and the second enhanced RTS transmission.

In one embodiment, a single multi-link CTS transmission includes link status information for both the first link and the second link, and is transmitted over one of the first link and the second link. In another embodiment, a first CTS transmission is transmitted over the first link, and a second CTS transmission is transmitted over the second link upon completion of the first CTS transmission. The first enhanced RTS transmission and the second enhanced RTS transmission include a sequence of the first CTS transmission and the second CTS transmission.

At 808, a first transmission is received from the AP over the first link between the STA and the AP. The first transmission includes a first PE. At 810, a second transmission is received from the AP over the second link between the STA and the AP. The second transmission is received concurrently with the first transmission and includes a second PE. The first and second PEs are determined during multi-link setup between the AP and the STA. At 812, feedback with respect to both the first transmission and the second transmission is transmitted to the AP over one of the first link and the second link after a respective one of the first PE and the second PE.

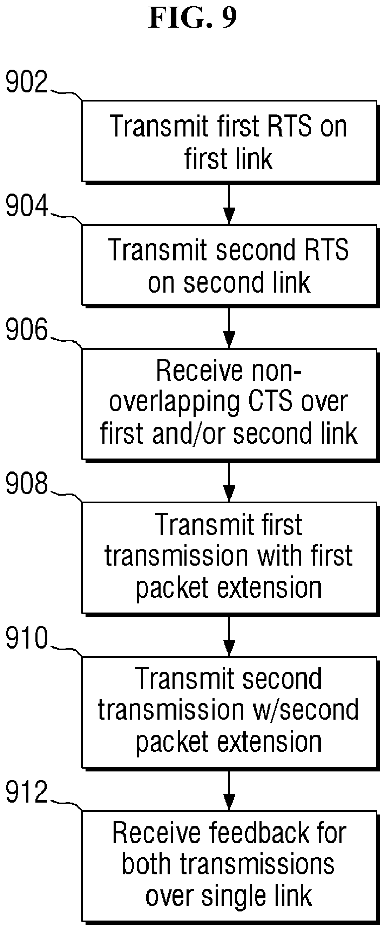

Referring now to FIG. 9, a flowchart illustrates a method for multi-link TXOP aggregation at an AP, according to an embodiment. At 902, a first enhanced RTS transmission is transmitted to a STA on a first link between the STA and the AP. At 904, a second enhanced RTS transmission is transmitted to the STA on a second link between the STA and the AP. The second enhanced RTS transmission is received concurrently with the first enhanced RTS transmission. At 906, at least one non-overlapping CTS transmission is transmitted over at least one of the first link and the second link, in response to the first enhanced RTS transmission and the second enhanced RTS transmission.

In one embodiment, a single multi-link CTS transmission includes link status information for both the first link and the second link, and is transmitted over one of the first link and the second link. In another embodiment, a first CTS transmission is transmitted over the first link, and a second CTS transmission is transmitted over the second link upon completion of the first CTS transmission. The first enhanced RTS transmission and the second enhanced RTS transmission include a sequence of the first CTS transmission and the second CTS transmission.

At 908, a first transmission is transmitted to the STA over the first link between the STA and the AP. The first transmission includes a first PE. At 910, a second transmission is transmitted to the STA over a second link between the STA and the AP. The second transmission is transmitted concurrently with the first transmission and includes a second PE. The first and second PEs are determined during multi-link setup between the AP and the STA. At 912, feedback with respect to both the first transmission and the second transmission is received from the STA over one of the first link and the second link after a respective one of the first PE and the second PE.

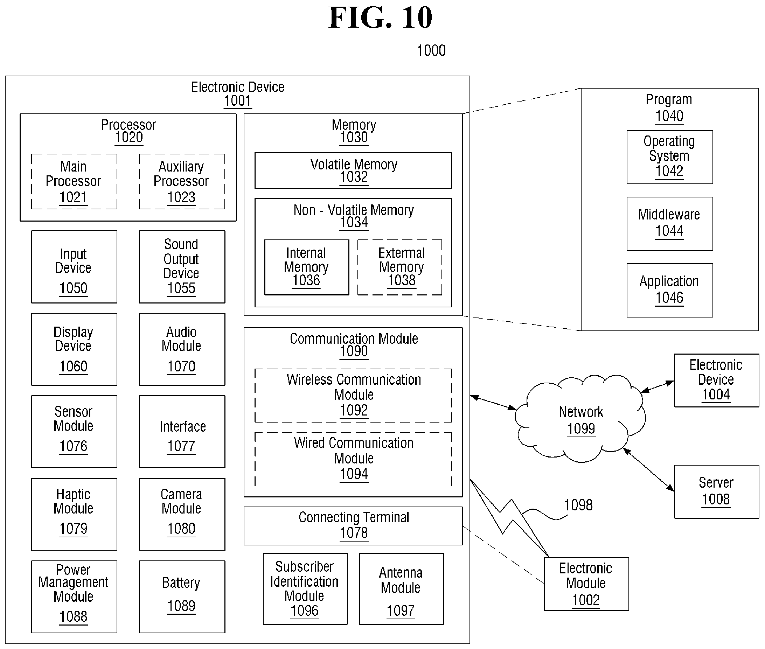

FIG. 10 is a block diagram of an electronic device in a network environment, according to one embodiment. Referring to FIG. 10, an electronic device 1001 in a network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) 1096, or an antenna module 1097. In one embodiment, at least one (e.g., the display device 1060 or the camera module 1080) of the components may be omitted from the electronic device 1001, or one or more other components may be added to the electronic device 1001. In one embodiment, some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute, for example, software (e.g., a program 1040) to control at least one other component (e.g., a hardware or a software component) of the electronic device 1001 coupled with the processor 1020, and may perform various data processing or computations. As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to one embodiment, the auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input device 1050 may receive a command or data to be used by other component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. According to one embodiment, the receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. According to one embodiment, the display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. According to one embodiment, the audio module 1070 may obtain the sound via the input device 1050, or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. According to one embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. According to one embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. According to one embodiment, the haptic module 1079 may include, for example, a motor, a piezoelectric element, or an electrical stimulator.

The camera module 1080 may capture a still image or moving images. According to one embodiment, the camera module 1080 may include one or more lenses, image sensors, image signal processors, or flashes.

The power management module 1088 may manage power supplied to the electronic device 1001. The power management module 1088 may be implemented as at least part of, for example, a power management integrated circuit (PMIC).

The battery 1089 may supply power to at least one component of the electronic device 1001. According to one embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. According to one embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth™, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096. According to an embodiment of the present disclosure, one or more wireless communication modules 1092 may communicate with both a cellular network and a LAN over the second network 1099.

The antenna module 1097 may transmit or receive a signal or power to or from the outside (e.g., the external electronic device) of the electronic device 1001. According to one embodiment, the antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

At least some of the above-described components may be mutually coupled and communicate signals (e.g., commands or data) therebetween via an inter-peripheral communication scheme (e.g., a bus, a general purpose input and output (GPIO), a serial peripheral interface (SPI), or a mobile industry processor interface (MIPI)).

According to one embodiment, commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

One embodiment may be implemented as software (e.g., the program 1040) including one or more instructions that are stored in a storage medium (e.g., internal memory 1036 or external memory 1038) that is readable by a machine (e.g., the electronic device 1001). For example, a processor of the electronic device 1001 may invoke at least one of the one or more instructions stored in the storage medium, and execute it, with or without using one or more other components under the control of the processor. Thus, a machine may be operated to perform at least one function according to the at least one instruction invoked. The one or more instructions may include code generated by a complier or code executable by an interpreter. A machine-readable storage medium may be provided in the form of a non-transitory storage medium. The term "non-transitory" indicates that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one embodiment, each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In this case, the integrated component may still perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

Although certain embodiments of the present disclosure have been described in the detailed description of the present disclosure, the present disclosure may be modified in various forms without departing from the scope of the present disclosure. Thus, the scope of the present disclosure shall not be determined merely based on the described embodiments, but rather determined based on the accompanying claims and equivalents thereto.

## Claims

1. A method for multi-link transmission opportunity aggregation at a mobile station, the method comprising:
receiving, from an access point, a first transmission over a first link between the mobile station and the access point, the first transmission comprising a first packet extension;
receiving, from the access point, a second transmission over a second link between the mobile station and the access point, the second transmission being received concurrently with the first transmission and comprising a second packet extension; and
transmitting, to the access point, feedback with respect to both the first transmission and the second transmission over one of the first link and the second link after reception of a respective one of the first packet extension and the second packet extension is completed.

2. The method of claim 1, wherein the mobile station is not capable of simultaneous transmit-receive and simultaneous transmit-transmit over the first and second links, and is capable of simultaneous receive-receive over the first and second links.

3. The method of claim 1, wherein the first and second packet extensions are determined during multi-link setup between the access point and the mobile station.

4. The method of claim 1, wherein the one of the first link and the second link is set by the access point.

5. The method of claim 1, further comprising:
prior to receiving the first transmission, receiving, from the access point, a first enhanced ready to send (RTS) transmission on the first link;
prior to receiving the second transmission, receiving, from the access point, a second enhanced RTS transmission on the second link, the second enhanced RTS transmission being received concurrently with the first enhanced RTS transmission; and
prior to the first and second transmissions, transmitting, to the access point, at least one non-overlapping clear to send (CTS) transmission over at least one of the first link and the second link, in response to the first enhanced RTS transmission and the second enhanced RTS transmission.

6. The method of claim 5, wherein the first enhanced RTS transmission comprises a third packet extension, and the second enhanced RTS transmission comprises a fourth packet extension.

7. The method of claim 5, wherein transmitting the at least one non-overlapping CTS transmission comprises:
transmitting, to the access point, a single multi-link CTS transmission comprising channel status information for both the first link and the second link over one of the first link and the second link.

8. The method of claim 5, wherein transmitting the at least one non-overlapping CTS transmission comprises:
transmitting, to the access point, a first CTS transmission over the first link; and
transmitting, to the access point, a second CTS transmission over the second link, upon completion of the first CTS transmission.

9. The method of claim 8, wherein the first enhanced RTS transmission and the second enhanced RTS transmission comprise a transmission sequence of the first CTS transmission and the second CTS transmission.

10. A method for multi-link transmission opportunity aggregation at a mobile station, the method comprising:
receiving, from an access point, a first enhanced ready to send (RTS) transmission on a first link between the mobile station and the access point;
receiving, from the access point, a second enhanced RTS transmission on a second link between the mobile station and the access point, the second enhanced RTS transmission being received concurrently with the first enhanced RTS transmission; and
transmitting, to the access point, at least one non-overlapping clear to send (CTS) transmission over at least one of the first link and the second link, in response to the first enhanced RTS transmission and the second enhanced RTS transmission.
